(19) Europäisches Patentamt

European Patent Office

Office européen des brevets

(11) Veröffentlichungsnummer : **0 290 529 B1**

(12) **EUROPÄISCHE PATENTSCHRIFT**

(45) Veröffentlichungstag der Patentschrift :
24.04.91 Patentblatt 91/17

(21) Anmeldenummer : 87907502.6

(22) Anmeldetag : 19.11.87

(86) Internationale Anmeldenummer :
PCT/DE87/00528

(87) Internationale Veröffentlichungsnummer :
WO 88/04036 02.06.88 Gazette 88/12

(51) Int. Cl.⁵ : **G01J 3/18**

(54) **MONOCHROMATORANORDNUNG.**

(30) Priorität : 24.11.86 DE 3640044

(43) Veröffentlichungstag der Anmeldung :
17.11.88 Patentblatt 88/46

(45) Bekanntmachung des Hinweises auf die
Patenterteilung :
24.04.91 Patentblatt 91/17

(84) Benannte Vertragsstaaten :
AT BE CH DE FR GB IT LI LU NL SE

(56) Entgegenhaltungen :
DE-A- 3 400 299
US-A- 3 069 967
US-A- 3 700 898
US-A- 3 749 498
Fresenius Zeitschrift für Analytische Chemie,-
vol. 317, 1984, Springer-Verlag, G. Schmidtke
et al.: "Gas analysis with IR-diode laser spectrometers", pages 347-348; fig. 1

(73) Patentinhaber :
FRAUNHOFER-GESELLSCHAFT ZUR
FÖRDERUNG DER ANGEWANDTEN
FORSCHUNG E.V.
Leonrodstrasse 54
W-8000 München 19 (DE)

(72) Erfinder : RIEDEL, Wolfgang
Vogelwäldeleweg 8
W-7844 Neuenburg (DE)
Erfinder : KNOTHE, Manfred
Hansjakobstrasse 100
W-7800 Freiburg (DE)
Erfinder : GRISAR, Roland
Gerberau 14
W-7800 Freiburg (DE)
Erfinder : WOLF, Helmut
Herchersgarten 26 b
W-7802 Merzhausen (DE)
Erfinder : PREIER, Horst, Maximilian
100 Hayward Road
Acton, MA 01720 (US)

(74) Vertreter : Rackette, Karl, Dipl.-Phys. Dr.-Ing
Kaiser-Joseph-Strasse 179 Postfach 1310
W-7800 Freiburg (DE)

## Beschreibung

Die Erfindung betrifft eine Monochromatoranordnung mit einem verstellbaren Gittermonochromator, dessen Strahlengang einen Eintrittsfokus und einen gegenüber dem Eintrittsfokus seitlich versetzten Austrittsfokus aufweist.

Solche aus der DE 34 00 299 C 2 und Fresenius Z. Anal. Chemie (1984) 317 : 347-349 bekannte Monochromatoranordnungen werden bei der Verwendung von abstimmbaren Infrarot-Diodenlasern für die hochauflösende Spektroskopie, z.B. in der quantitativen Gasanalyse, verwendet, um das von dem Diodenlaser emittierte Spektrum in einzelne Lasermoden bzw. Laserfrequenzen zu separieren und die übrigen Moden auszublenden. Zur Modenselektion werden dabei Gittermonochromatoren mit hoher Auflösung eingesetzt.

Bei bekannten Monochromatoranordnungen ist es zu Justierzwecken erforderlich, einen Planspiegel innerhalb der Monochromatoranordnung vor das Beugungsgitter einzuschwenken. Da ein solcher Spiegel notwendigerweise vor dem Beugungsgitter angeordnet ist, ändert sich beim eingeschwenkten Spiegel die Ausleuchtung der nachfolgenden Optiken. Eine Opimierung der Ausleuchtung ist demnach nicht für alle Fälle erreichbar.

Ausgehend von diesem Stand der Technik liegt der Erfindung die Aufgabe zugrunde, eine Monochromatoranordnung zu schaffen, die nachträglich in einen einen Zwischenfokus aufweisenden äußeren Strahlengang eines Spektrometers eingesetzt werden kann, nachdem dieser bereits justiert worden ist, wobei diese Justierung voll erhalten bleiben soll.

Diese Aufgabe wird erfindungsgemäß dadurch gelöst, daß dem Gittermonochromator eine ebene Umlenkspiegel aufweisende Umlenkeinrichtung zugeordnet ist, durch die der Eintrittsfokus und der Austrittsfokus in ein und denselben punkt abgebildet werden, der auf der Verbindungslinie zwischen dem Eintrittsfokus und dem Austrittsfokus außerhalb des Gittermonochromators liegt.

Bei der erfindungsgemäßen Monochromatoranordnung ist eine Justage und ein Betrieb der gesamten Spektrometeranordnung ohne Monochromator möglich.

Bei der erfindungsgemäßen Monochromatoranordnung werden der Eintritts- und der Austrittsstrahl durch Umlenkspiegel so umgelenkt, daß der Eintritts- und der Austrittsfokus in einen Punkt zu liegen kommen, wobei die Eintritts- und Austrittsrichtungen identisch sind. Auf diese Weise kann die Monochromatoranordnung in Durchsicht in einem Zwischenfokus eines optischen Laserspektrometeraufbaus betrieben werden, ohne den äußeren Strahlengang zu beeinflussen.

Gemäß Patentanspruch 2 wird ein Beugungsgitter in der Monochromatoranordnung zur Erhöhung der Dispersion doppelt und unter einem großen Winkel genutzt. Auf diese Weise wird auch bei einem kleinen Gitter von nur etwa 30 mm Kantenlänge eine genügend hohe Auflösung zur Modenselektion erreicht. Durch die Möglichkeit, mit einem kleinen Gitter auszukommen, kann die Monochromatoranordnung sehr schmal gebaut werden, was eine Aneinanderreihung in geringem Abstand ermöglicht. Im Monochromator ist ein außeraxialer Parabolspiegel als Kollimator eingesetzt, um eine beugungsbegrenzte und astigmatismusfreie Abbildung zu erreichen.

Dank der Umlenkeinrichtung der Monochromatoranordnung ist es möglich, den Eingangsfokus des Monochromators an den Ort eines Zwischenfokus des äußeren Strahlenganges zu bringen und den Ausgangsfokus des Monochromators durch Spiegelung ebenfalls in denselben Zwischenfokus derart abzubilden, daß der Monochromator den äußeren Strahlengang wieder herstellt und von außen wie eine Lochblende mit spektraler Filterwirkung erscheint. Die Umlenkeinrichtung ist integraler Bestandteil der Monochromatoranordnung. Mittels eines Zentrierstiftes kann die Monochromatoranordnung reproduzierbar genau in einen freien Zwischenfokus der äußeren Spektrometeranordnung eingefügt werden.

Zweckmäßige Weiterbildungen und Ausgestaltungen der Erfindung sind in den Unteransprüchen gekennzeichnet.

Nachfolgend wird die Erfindung anhand eines in der Zeichnung dargestellten Ausführungsbeispiels näher beschrieben. Es zeigen :

Fig. 1 eine Monochromatoranordnung gemäß der Erfindung in einer Seitenansicht, teilweise im Schnitt,

Fig. 2 die Umlenkeinrichtung der Monochromatoranordnung in einer vergrößerten Seitenansicht,

Fig. 3 die Umlenkeinrichtung gemäß Fig. 2 in einer Ansicht von oben,

Fig. 4 den prinzipiellen Strahlengang des Monochromators in einer schematischen Seitenansicht und

Fig. 5 den prinzipiellen Strahlengang des der Umlenkeinrichtung zugeordneten Monochromators in einer Draufsicht.

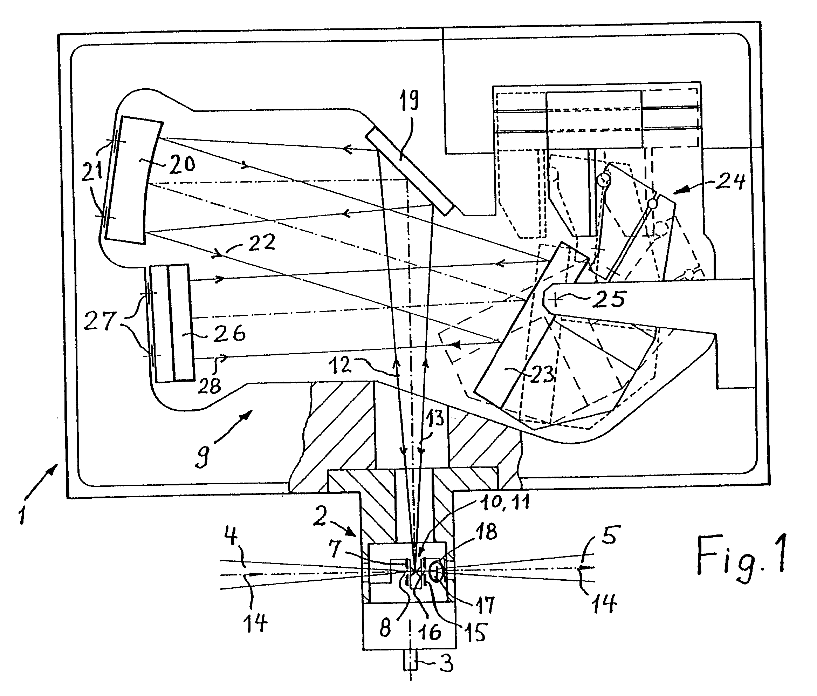

Die in Fig. 1 dargestellte Monochromatoranordnung verfügt über ein Monochromatorgehäuse 1 und ein Umlenkeinrichtungsgehäuse 2, das als Einsteckteil ausgebildet ist und an seinem in Fig. 1 unteren Ende mit einem Zentrierstift 3 versehen ist.

Links und rechts vom Umlenkeinrichtungsgehäuse 2 erkennt man einen konvergierenden eingehenden äußeren Strahlengang 4 und einen divergierenden ausgehenden äußeren Strahlengang 5. Der konvergierende äußere Strahlengang 4 stammt vom Licht eines abstimmbaren Infrarot-Lasers, der in der Zeichnung nicht dargestellt ist und bei höchst auflösender Spektroskopie, z.B. in der quantitativen Gasanalyse, Verwendung findet. Das Licht des in der Zeichnung nicht dargestellten Lasers ist auf einen Zwischenfokus 6 fokussiert, der dem konvergierenden äußeren Strahlengang 4 und dem divergierenden äußeren Strahlengang 5 zugeordnet ist. Der divergierende äußere Strahlengang 5 gelangt zu einer in der Zeichnung ebenfalls nicht dargestellten Meßstrecke und schließlich zu einem in der Zeichnung nicht dargestellten Detektor.

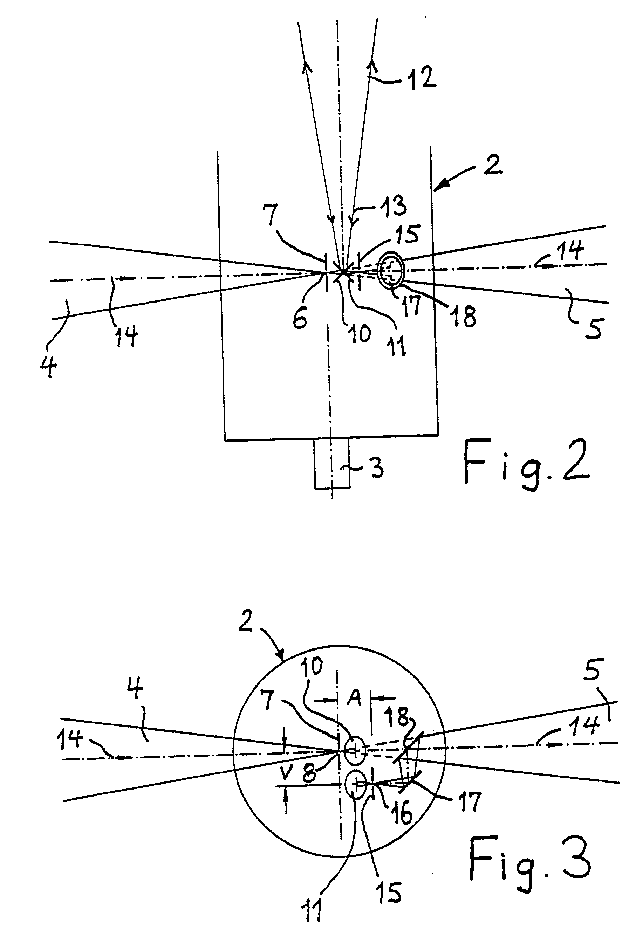

Der Zwischenfokus 6 liegt innerhalb des Umlenkeinrichtungsgehäuses 2, wie am besten in den Figuren 2 und 3 zu erkennen ist, in der Öffnung der Eingangslochblende 7 der Monochromatoranordnung. Die Öffnung der Eingangslochblende 7 bildet gleichzeitig den Eintrittsfokus 8 für den im Monochromatorgehäuse 1 angeordneten Monochromator 9. Die Längsachse des Zentrierstiftes 3 geht durch den Zwischenfokus 6 und den Eintrittsfokus 8.

Wenn die in Fig. 1 dargestellte Monochromatoranordnung aus dem Strahlengang des nicht dargestellten Laserspektrometers weggenommen wird, verändert sich der in Fig. 1 unten dargestellte konvergierende äußere Strahlengang 4 und divergierende äußere Strahlengang 5 in seiner Lage nicht. Die in Fig. 1 dargestellte Monochromatoranordnung wirkt daher wie eine Lochblende mit spektraler Filterwirkung.

Nachdem das Licht des konvergierenden äußeren Strahlengangs 4 die Eingangslochblende 7 im Umlenkeinrichtungsgehäuse 2 passiert hat, gelangt das Licht in dem die Eingangslochblende 7 verlassenden divergierenden äußeren Strahlengang 5 in Fortpflanzungsrichtung des Lichtes kurz hinter der Eingangslochblende 7 auf einen ersten Umlenkspiegel 10, der in Fig. 1 zusammen mit einem zweiten Umlenkspiegel 11 in Seitenansicht die Gestalt eine X-Buchstabens hat und in den Figuren 2 und 3 deutlicher zu erkennen ist. Der erste Umlenkspiegel 10 lenkt in den Figuren 1 und 2 das Laserlicht um 90° nach oben ab, wobei der umgelenkte Strahl in den Figuren 1 und 2 mit dem Bezugszeichen 12 versehen ist. Der umgelenkte Strahl 12 bildet für den im Monochromatorgehäuse 1 angeordneten Monochromator 9 den Eingangsstrahl. Der Ausgangsstrahl 13 des Monochromators 9 ist in den Figuren 1, 2 und 4 überlappend mit dem Eingangsstrahl 12 dargestellt, obwohl, wie am besten den Figuren 3 und 5 entnommen werden kann, der Ausgangsstrahl 13 beim Verlassen des Monochromators 9 gegenüber dem Eingangsstrahl 12 quer zur Fortpflanzungsrichtung des äußeren Strahlengangs 4, 5 versetzt ist, so daß der Ausgangsstrahl 13 auf den zweiten Umlenkspiegel 11 auftrifft, der, wie in Fig. 3 dargestellt ist, quer zur Fortpflanzungsrichtung 14 des äußeren Strahlengangs 4, 5 um einen Betrag V seitlich versetzt ist.

Entsprechend dem seitlichen Versatz des zweiten Umlenkspiegels 11 ist in dem Umlenkeinrichtungsgehäuse 2 eine gegenüber der Eingangslochblende 7 versetzte Ausgangslochblende 15 vorgesehen. Die Ausgangslochblende 15 ist, wie in Fig. 3 zu erkennen ist, gegenüber der Eingangslochblende 7 quer zur Fortpflanzungsrichtung 14 um den gleichen Betrag V versetzt wie der zweite Umlenkspiegel 11. Außerdem ist die Ausgangslochblende 15 um den Betrag A in Fortpflanzungsrichtung 14 verschoben, wobei der Betrag A gleich dem Versatz V ist.

Der Austrittsfokus 16 des Monochromators 9 liegt im richtig justierten Zustand genau in der Öffnung der Ausgangslochblende 15.

Wie man am besten in Fig. 3 erkennt, lenkt der gegenüber dem ersten Umlenkspiegel 10 um 90° verkippte zweite Umlenkspiegel 11 den Ausgangsstrahl 13 des Monochromators 9 auf einen dritten Umlenkspiegel 17, durch den der Ausgangsstrahl 13 des Monochromators 9 entgegen der Richtung des Versatzes des zweiten Umlenkspiegels 11 im Bezug auf den ersten Umlenkspiegel 10 umgelenkt wird.

Ein vierter Umlenkspiegel 18 ist im Umlenkeinrichtungsgehäuse 2 in Verlängerung des auf den ersten Umlenkspiegel 10 auftreffenden divergierenden Strahlenbündels, das in seiner Lage mit dem divergierenden äußeren Strahlengang 5 zusammenfällt, angeordnet und lenkt das den dritten Umlenkspiegel 17 verlassende Strahlenbündel um 90° in die Fortpflanzungsrichtung 14 um, so daß das den vierten Umlenkspiegel 18 verlassende Lichtstrahlbündel die gleiche Lage wie der divergierende äußere Strahlengang 5 hat. Die Spiegelanordnung im Umlenkeinrichtungsgehäuse 2 bewirkt somit einerseits, daß der Eingangsfokus des Monochromators 9 an den Ort des Zwischenfokus 6 des äußeren Strahlengangs 4, 5 gebracht wird und andererseits der Ausgangsfokus 16 des Monochromators 9 durch Spiegelung an den Umlenkspiegeln 11, 17 und 18 ebenfalls an den gleichen Zwischenfokus 6 abgebildet wird, so daß die Monochromatoranordnung den äußeren Strahlengang 4, 5 unverändert läßt.

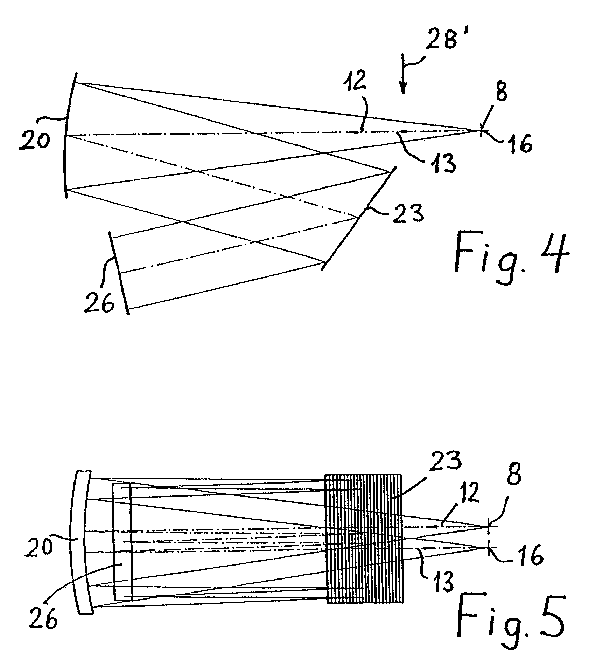

Im Anschluß an die Beschreibung der im Umlenkeinrichtungsgehäuse 2 vorhandenen Umlenkeinrichtung soll nunmehr der Aufbau des Monochromators 9 im Gehäuse 1 erörtert werden. Hierzu wird neben Fig. 1 Bezug genommen auf die Figuren 4 und 5.

Der Eingangsstrahl 12 des Monochromators 9 gelangt zunächst zu einem im Monochromatorgehäuse 1 um 45° gegenüber der Längsachse des Zentrierstiftes 3 geneigten Faltungsspiegel 19. Nach Reflexion am Faltungsspiegel 19 gelangt die Strahlung auf einen als Kollimatorspiegel vorgesehenen außeraxialen Parabolspiegel 20, der im Gehäuse 1 mit Hilfe eines justierbaren Dreipunktlagers 21 befestigt ist. Durch den Parabolspiegel 20 wird die Strahlung zu einem Parallelstrahl 22 kollimiert und gelangt dann auf ein Gitter 23. Vom Gitter 23, das über einen Sinusantrieb 24 um eine Achse 25 rechtwinklig zur Fortpflanzungsrichtung im äußeren Strahlengang 4, 5 verkippbar ist, wird der Strahl in Richtung auf einen Planspiegel 26 gebeugt, der mit Hilfe eines justierbaren Dreipunktlagers 27 im Innern des Gehäuses 1 befestigt ist. Die Dispersionsebene des Gitters 23 verläuft parallel zur Zeichenebene, die zwischen dem Eintrittsfokus 8 und dem Austrittsfokus 16 verläuft. Der Planspiegel 26 wird bei der in Fig. 1 dargestellten Justierung im wesentlichen von unterhalb der Zeichenebene angestrahlt und reflektiert die eingefallene Strahlung schräg in Richtung oberhalb der Zeichenebene. Nach der Reflexion am Planspiegel 26 wird der Strahl 28 ein zweites Mal am Gitter 23 gebeugt und dann vom Parabolspiegel 20 in den Austrittsfokus 16 fokussiert, der in Fig. 4 oberhalb der Zeichenebene liegt, während sich in Fig. 4 der Eintrittsfokus 8 unterhalb der Zeichenebene befindet.

Zur Verdeutlichung der Lage des Eintrittsfokus 8 und des Austrittsfokus 16 zeigt Fig. 5 eine Darstellung, die sich aus Fig. 4 bei einem Blick in Richtung eines Pfeiles 28' ergibt.

Bei entsprechender Gitterstellung wird die Strahlung bereits bei der ersten Beugung am Gitter 23 in Richtung auf den Parabolspiegel 20 gebeugt. Der Parabolspiegel 20 ist jedoch so justiert, daß dann die fokussierte Strahlung nicht in den regulären Austrittsfokus 16 fallen kann und so eine Fehlmessung der Laserwellenlänge vermieden wird. Bei einem regulären Durchgang wird die Strahlung durch Ausrichten des Planspiegels 26 auf den Austrittsfokus 16 hin fokussiert.

Wie der Fachmann der obigen Beschreibung entnehmen kann, sind der Eingangsstrahl 12 und der Ausgangsstrahl 13 nur quer zur Dispersionsebene des Gitters 23 versetzt.

**Ansprüche**

1. Monochromatoranordnung mit einem verstellbaren Gittermonochromator, dessen Strahlengang einen Eintrittsfokus und einen gegenüber dem Eintrittsfokus seitlich versetzten Austrittsfokus aufweist, **dadurch gekennzeichnet, daß dem Gittermonochromator (9) eine ebene Umlenkspiegel (10, 11, 17, 18) aufweisende Umlenkeinrichtung (2) zugeordnet ist, durch die der Eintrittsfokus (8) und der Austrittsfokus (16) in ein und denselben Punkt (6) abgebildet werden der auf der Verbindungslinie zwischen dem Eintrittsfokus (8) und dem Austrittsfokus (16) außerhalb des Gittermonochromators (9) liegt.

2. Monochromatoranordnung nach Anspruch 1, **dadurch gekennzeichnet, daß der Gittermonochromator (9) einen außeraxialen Parabolspiegel (20) aufweist, durch den der über den Eintrittsfokus (8) eintretende Lichtstrahl (12) kollimiert und zu einem Gitter (23) gelenkt wird, das den Lichtstrahl in Richtung auf einen Planspiegel (26) beugt, der den empfangenen Lichtstrahl zum Gitter (23) zurückreflektiert, wo er zum zweiten Mal gebeugt wird, bevor er vom Parabolspiegel (20) in den Austrittsfokus (16) fokussiert wird.

3. Monochromatoranordnung nach Anspruch 1 oder 2, **dadurch gekennzeichnet, daß der Monochromator (9) seitlich gegenüber der Umlenkeinrichtung (2) versetzt angeordnet ist und die Umlenkeinrichtung (2) den einfallenden äußeren Strahlengang (4) mit Hilfe eines ersten Umlenkspiegels (10) rechtwinklig in den Monochromator (9) umlenkt.

4. Monochromatoranordnung nach Anspruch 3, **dadurch gekennzeichnet, daß die Umlenkvorrichtung (2) einen zweiten Umlenkspiegel (11) aufweist, durch den die Austrittsstrahlung (13) des Monochromators (9) rechtwinklig parallel zum einfallenden äußeren Strahlengang (4) abgelenkt wird.

5. Monochromatoranordnung nach Anspruch 3 und 4, **dadurch gekennzeichnet, daß den beiden Umlenkspiegeln (10, 11) jeweils Lochblenden (7, 15) zugeordnet sind.

6. Monochromatoranordnung nach Anspruch 5, **dadurch gekennzeichnet, daß die dem ersten Umlenkspiegel (10) zugeordnete Eingangslochblende (7) in einem Zwischenfokus (6) des äußeren Strahlenganges (4) angeordnet ist.

7. Monochromatoranordnung nach einem der Ansprüche 4 bis 6, **dadurch gekennzeichnet, daß dem zweiten Umlenkspiegel (11) ein dritter und ein vierter Umlenkspiegel (17, 18) zugeordnet sind, durch die der durch den zweiten Umlenkspiegel (11) umgelenkte Austrittsstrahl (13) des Monochromators (9) parallel in den äußeren Strahlengang (5) verschiebbar ist.

8. Monochromatoranordnung nach einem der Ansprüche 5 oder 6, **dadurch gekennzeichnet, daß der seitliche Versatz (V) der Lochblenden (7, 15) gleich dem Abstand (A) der Lochblenden (7, 15) in Richtung des äußeren Strahlenganges (4, 5) ist.

9. Monochromatoranordnung nach einem der Ansprüche 4 bis 8, **dadurch gekennzeichnet, daß die ersten und zweiten Umlenkspiegel (10, 11) um 90° um eine Achse rechtwinklig zu der vom äußeren Strahlengang (4, 5) und dem Strahlengang (12, 13) im Monochromator (9) aufgespannten Ebene gegeneinander verdreht sind.

10. Monochromatoranordnung nach den Ansprüchen 5 und 7, **dadurch gekennzeichnet, daß der Abstand zwischen dem dritten und vierten Umlenkspiegel (17, 18) gleich dem Querversatz (V) zwischen der Eintrittslochblende (7) und der Austrittslochblende (15) ist und daß die Summe der Abstände zwischen der Austrittslochblende (15) sowie dem dritten Umlenkspiegel (17) und dem dritten Umlenkspiegel (17) sowie dem vierten Umlenkspiegel (18) gleich dem Abstand zwischen der Eintrittslochblende (7) und dem vierten Umlenkspiegel (18) ist.

## Claims

1. A monochromator arrangement comprising a displaceable grating monochromator whose beam path has an entry focus and an exit focus which is displaced laterally with respect to the entry focus, characterised in that associated with the grating monochromator (9) is a deflection arrangement (2) which has flat deflection mirrors (10, 11, 17, 18) and by means of which the entry focus (8) and the exit focus (16) are formed at one and the same point (6) which is disposed on the connecting line between the entry focus (8) and the exit focus (16) outside the grating monochromator (9).

2. A monochromator arrangement according to claim 1 characterised in that the grating monochromator (9) has an extra-axial parabolic mirror (20) by which the light beam (12) entering by way of the entry focus (8) is collimated and deflected to a grating (23) which diffracts the light beam towards a plane mirror (26) which reflects the received light beam back to the grating (23) where it is diffracted for the second time before it is focussed at the exit focus (16) by the parabolic mirror (20).

3. A monochromator arrangement according to claim 1 or claim 2 characterised in that the monochromator (9) is arranged displaced laterally with respect to the deflection arrangement (2) and the deflection arrangement (2) deflects the incident external beam path (4) through a right angle into the monochromator (9) by means of a first deflection mirror (10).

4. A monochromator arrangement according to claim 3 characterised in that the deflection arrangement has a second deflection mirror (11) by which the exit beam (13) of the monochromator (9) is deflected away through a right angle in parallel relationship to the incident external beam path (4).

5. A monochromator arrangement according to claim 3 and claim 4 characterised in that respective diaphragms (7, 15) are associated with each of the two deflection mirrors (10, 11).

6. A monochromator arrangement according to claim 5 characterised in that the entrance diaphragm (7) which is associated with the first deflection mirror (10) is arranged at an intermediate focus (6) of the external beam path (4).

7. A monochromator arrangement according to one of claims 4 to 6 characterised in that associated with the second deflection mirror (11) are third and fourth deflection mirrors (17, 18) by which the exit beam (13) of the monochromator (9), which is deflected by the second deflection mirror (11), is displaceable in parallel relationship into the outer beam path (5).

8. A monochromator arrangement according to one of claims 5 and 6 characterised in that the lateral displacement (V) of the diaphragms (7, 15) is equal to the spacing (A) of the diaphragms (7, 15) in the direction of the external beam path (4, 5).

9. A monochromator arrangement according to one of claims 4 to 8 characterised in that the first and second deflection mirrors (10, 11) are turned in opposite relationship to each other through 90° about an axis at a right angle to the plane defined by the outer beam path (4, 5) and the beam path (12, 13) in the monochromator (9).

10. A monochromator arrangement according to claims 5 and 7 characterised in that the spacing between the third and fourth deflection mirrors (17, 18) is equal to the transverse displacement (V) between the entry diaphragm (7) and the exit diaphragm (15) and that the sum of the spacings between the exit diaphragm (15) and the third deflection mirror (17) and the third deflection mirror (17) and the fourth deflection mirror (18) is equal to the spacing between the entry diaphragm (7) and the fourth deflection mirror (18).

## Revendications

1. Agencement de monochromateur avec un monochromateur à réseau déplaçable dont la trajectoire de rayons comporte un foyer d'entrée et un foyer de sortie pouvant être décalé latéralement par rapport au foyer d'entrée, caractérisé en ce que au monochromateur à réseau (9) est associé un système déflecteur (2), présentant des miroirs plans de déviation (10, 11, 17, 18), par lequel le foyer d'entrée (8) et le foyer de sortie (16) sont formés en un seul et même point (6), qui se situe sur la ligne de liaison entre le foyer d'entrée (8) et le foyer de sortie (16) à l'extérieur du monochromateur à réseau (9).

2. Agencement de monochromateur selon la revendication 1, caractérisé en ce que le monochromateur à réseau (9) comporte un miroir parabolique (20) extra-axial, au travers duquel le faisceau lumineux (12) entrant par le foyer d'entrée (8) est collimaté et dévié vers un réseau (23), qui diffracte le faisceau lumineux en direction d'un miroir plan (26), qui réfléchit à nouveau le faisceau lumineux reçu en direction du réseau (23), où il est diffracté une deuxième fois avant d'être focalisé par le miroir parabolique (20) dans le foyer de sortie (16).

3. Agencement de monochromateur selon la revendication 1 ou 2, caractérisé en ce que le monochromateur (9) est monté déplaçable latéralement par rapport à un système déflecteur (2) et que le système déflecteur (2) dévie la trajectoire extérieure de rayons (4) d'entrée, à angle droit dans le monochromateur (9) à l'aide d'un premier miroir de déviation (10).

4. Agencement de monochromateur selon la revendication 3, caractérisé en ce que le système déflecteur (2) comporte un second miroir de déviation (11), par lequel le faisceau de sortie (13) du monochromateur (9) est dévié à angle droit, parallèlement à la trajectoire extérieure de rayons (4) d'entrée.

5. Agencement de monochromateur selon les revendications 3 et 4, caractérisé en ce que à chacun des deux miroirs de déviation (10, 11) corresponde un diaphragme à trou (7, 15).

6. Agencement de monochromateur selon la revendication 5, caractérisé en ce que le diaphragme d'entrée (7) associé au premier miroir de déviation (7) est disposé dans un foyer intermédiaire (6) de la trajectoire extérieure de rayons (4).

7. Agencement de monochromateur selon l'une des revendications 4 à 6, caractérisé en ce que au deuxième miroir de déviation (11) sont associés un troisième et un quatrième miroir de déviation (17, 18), par lesquels le rayon de sortie (13) du monochromateur dévié par le deuxième miroir de déviation (11) peut être déplacé parallèlement dans la trajectoire extérieure de rayons (5).

8. Agencement de monochromateur selon l'une des revendications 5 ou 6, caractérisé en ce que le déport latéral (V) des diaphragmes à trou (7, 15) est égal à l'écart (A) entre les diaphragmes (7, 15) dans la direction des trajectoires extérieures de rayons (4, 5).

9. Agencement de monochromateur selon l'une des revendications 4 à 8, caractérisé en ce que les premier et deuxième miroir de déviation (10, 11) sont tournés l'un par rapport à l'autre de 90° autour d'un axe disposé à angle droit par rapport au plan déterminé dans le monochromateur (9) par les trajectoires extérieures de rayons (4, 5) et la trajectoire de rayons (12, 13).

10. Agencement de monochromateur selon les revendications 5 et 7, caractérisé en ce que l'écart entre le troisième et le quatrième miroir de déviation (17, 18) est égal au déport transversal (V) entre le diaphragme d'entrée (7) et le diaphragme de sortie (15) et que la somme des déports entre le diaphragme de sortie ainsi que le troisième miroir de déviation (17) et entre le troisième miroir de déviation (17) et le quatrième miroir de déviation (18) est égale à l'écart entre le diaphragme d'entrée (7) et le quatrième miroir de déviation (18).

Fig. 1

EP 0 290 529 B1

Fig.2

Fig.3

Fig. 4

Fig. 5

EP 0 290 529 B1